# EUROPÄISCHE PATENTANMELDUNG

(11) **EP 3 141 821 A1**
(43) Veröffentlichungstag der Anmeldung: **15.03.2017**
(21) Anmeldenummer: 16186576.1
(22) Anmeldetag: 31.08.2016
(51) Int. Cl.: F24D 3/14, E04F 15/18, F16L 3/04, F16L 3/137

(54) **UNTERBODENDÄMMELEMENT**

(30) Priorität: 08.09.2015 AT 5016915 U
(71) Anmelder: Lenzing Plastics GmbH & Co KG, 4860 Lenzing (AT)
(72) Erfinder: BRANDSTÄTTER, Andreas, 4851 Gampern (AT); WEISS, Anita, 4860 Lenzing (AT); SCHOBER, Phillipp, 4600 Wels (AT)
(74) Vertreter: Fabian, Ferdinand

(57) **Zusammenfassung**

Die Erfindung betrifft ein Unterbodendämmelement (2) umfassend einen Dämmelementkörper (4) aus einem wärmedämmenden Werkstoff, eine Reflexionsschicht (5) und eine Befestigungsschicht (6) für zumindest ein Heizungsrohr (3) einer Fußbodenheizung, wobei die Reflexionsschicht (5) zwischen dem Dämmelementkörper (4) und der Befestigungsschicht (6) für das zumindest eine Heizungsrohr (3) angeordnet ist, und wobei die Reflexionsschicht (5) eine metallisch bedampfte, wasserdichte Kunststofffolie (9) mit einem Sd-Wert von kleiner 1500 m nach EN 1931 ist, wobei die metallische Bedampfung (10) an einer, auf den Dämmelementkörper (4) weisenden Rückseite (11) der Kunststofffolie (9) aufgebracht ist oder dass die Reflexionsschicht (5) eine Metalleinlage ist, die an einer, auf den Dämmelementkörper (4) weisenden Rückseite (11) einer Kunststofffolie (9) mit einem Sd-Wert von kleiner 1500 m nach EN 1931 angeordnet ist.

## Beschreibung

Die Erfindung betrifft ein Unterbodendämmelement umfassend einen Dämmelementkörper aus einem wärmedämmenden Werkstoff, eine Reflexionsschicht und eine Befestigungsschicht für Heizungsrohre einer Fußbodenheizung, wobei die Reflexionsschicht zwischen dem Dämmelementkörper und der Befestigungsschicht für die Heizungsrohre angeordnet ist.
Weiter betrifft die Erfindung ein Fußbodenheizungssystem umfassend zumindest ein Unterbodendämmelement und zumindest ein Heizungsrohr.

Aus der DE 297 08 455 U1 ist eine Vorrichtung zum Befestigen von Fußbodenheizungsrohren auf Kunststoffisolierbahnen bekannt. Die Kunststoffisolierbahnen sind mit einem Vlies versehen, das ein Element eines Klettverschlusses bildet. Das Vlies ist dazu auf ihrer in der Gebrauchslage dem Estrich zugewandten Seite der Kunststoffisolierbahnen angeordnet. Die Fußbodenheizungsrohre sind in Abständen mittels Klettband-Hakenstreifen als korrespondierendes Element des Klettverschlusses am Vlies fixiert. Das Vlies ist flächendeckend auf die Reflexionsschicht der Wärmedämmplatten oder -bahnen aufkaschiert. Als Werkstoff für die Reflexionsschicht wir eine Aluminiumfolie beschrieben. Nachteilig ist dabei, dass bei der Einbringung des Estrichs dieser mit der Reflexionsschicht in Kontakt gerät. Durch die Basizität des Estrichs wird in der Folge die Reflexionsschicht angegriffen, wodurch deren Wirksamkeit verringert wird.

Die Aufgabe der Erfindung ist es, ein verbessertes Unterbodendämmelement für eine Fußbodenheizung zu schaffen. Es ist weiter die Aufgabe der Erfindung ein verbessertes Fußbodenheizungssystem bereitzustellen.

Die Aufgabe der Erfindung wird einerseits bei dem eingangs genannten Unterbodendämmelement dadurch gelöst, dass die Reflexionsschicht eine metallisch bedampfte, wasserdichte Kunststofffolie mit einem Sd-Wert von kleiner 1500 m nach EN 1931 ist, wobei die metallische Bedampfung oder die Metalleinlage an einer, auf den Dämmelementkörper weisenden Rückseite der Kunststofffolie aufgebracht ist, oder dass die Reflexionsschicht eine Metalleinlage ist, die an einer, auf den Dämmelementkörper weisenden Rückseite einer Kunststofffolie mit einem Sd-Wert von kleiner 1500 m nach EN 1931 angeordnet ist.

Weiter wird die Aufgabe der Erfindung bei dem eingangs genannten Fußbodenheizungssystem dadurch gelöst, dass das Heizungsrohr mit einem Teil eines Klettverschlusses zumindest teilweise ummantelt ist und das Unterbodendämmelement erfindungsgemäß ausgebildet ist.

Von Vorteil ist dabei, dass die metallische Bedampfung oder die Metalleinlage die Kunststofffolie vor dem Angriff des Estrichs geschützt ist. Die metallische Bedampfung kann darüber hinaus im Vergleich zu einer Metalleinlage dünner ausgeführt werden, wodurch eine entsprechende Kostenersparnis bei zumindest gleichbleibender Wirkung erreicht werden kann. Durch den Schutz der Kunststofffolie wird eine Oxidation der Metalloberfläche durch den basischen Estrich bzw. der Basizität des Estrichs verhindert bzw. zumindest verringert, sodass die Reflexonswirkung der metallischen Bedampfung für IR-Strahlung (Wärmestrahlung), die von den Fußbodenheizungsrohren abgegeben wird, keiner bzw. keiner wesentlichen Änderung unterliegt. Gleichzeitig kann durch die Wasserdampfdiffusionsfähigkeit der Kunststofffolie die Ansammlung von Wasserdampf in dem Unterbodendämmelement verhindert bzw. verringert werden, woraus ebenfalls die unveränderte bzw. im Wesentlichen unveränderte Aufrechterhaltung der Wirkung der metallischen Bedampfung begünstigt werden kann. Das Eindringen von Feuchtigkeit in flüssiger Form wird durch die Wasserdichtheit der Kunststofffolie vermieden. Es kann mit diesem Aufbau des Unterbodendämmelementes eine Verbesserung der Wärmeverteilung durch Infrarotreflexion bzw. durch Wärmeleitung in der Unterbodendämmelementebene erreicht werden, wobei eine ausgeprägte Wärmeleitung insbesondere mit der Ausführungsvariante des Unterbodendämmelementes mit der Metalleinlage in der Ebene der Metalleinalge erreicht werden kann. Durch die zumindest teilweise Ummantelung des Heizungsrohres mit einem Teil des Klettverschlusses kann das Heizungsrohr beliebig auf der Befestigungsschicht angeordnet werden, ohne dass zusätzliche Schritte zum Aufbringen von diesem Klettverschlussteil während der Verlegung der Heizschlangen der Fußbodenheizung erforderlich sind. Insbesondere muss auch nicht auf besondere Befestigungsstellen geachtet werden, wodurch die Verlegung der Heizschlangen deutlich vereinfacht werden kann. Durch die Art der Befestigung der Heizschlangen auf den Unterbodendämmelementen wird eine Beschädigung der Reflexionsschicht durch Perforieren vermieden.

Gemäß einer Ausführungsvariante kann vorgesehen sein, dass die metallische Bedampfung oder die Metalleinalge durch ein blankes Metall gebildet ist. Es kann damit die Wirkung der Reflexionsschicht deutlich verbessert werden.

Die Befestigungsschicht für die Heizungsrohre der Fußbodenheizung ist bevorzugt mit der Kunststofffolie verklebt. Obwohl an sich zu erwarten wäre, dass der Klebstoff einen Großteil der IR-Strahlung absorbiert, wurde überraschend das Gegenteil festgestellt. Der Klebstoff beeinträchtigt also die Reflektion der Wärmestrahlung von der metallischen Bedampfung kaum, selbst wenn der Klebstoff vollflächig aufgetragen ist. Die Verklebung hat den Vorteil, dass die Befestigungsschicht besser auf der Kunststofffolie hält, wodurch die Kräfte, die über die Heizungsrohre in die Befestigungsschicht eingeleitet werden, besser aufgenommen werden.

Dabei ist von Vorteil, wenn der Verbund der Befestigungsschicht mit der Kunststofffolie über den Klebstoff im ausgehärteten Zustand eine Schälfestigkeit nach DIN 53357 von mindestens 5 N/50 mm aufweist. Es können damit Dehnungen, die der Befestigungsschicht über die Heizungsrohre aufgezwungen werden, besser aufgenommen werden. Dies wiederum ist in Hinblick auf die Veimeidung von Schäden an der metallischen Bedampfung von Vorteil. Vorzugsweise ist die Befestigungsschicht ein klettfähiges Textil, wie insbesondere ein Vlies (Non-Woven), ein Velours, ein Gewirke, ein Gewebe, ein Gestrick, das ein Flächengewicht aufweist, das ausgewählt ist aus einem Bereich mit einer unteren Grenze von 20 g/m² und einer oberen Grenze von 200 g/m². Der Einsatz eines Textils mit diesem Flächengewicht erlaubt die Aufnahme höherer Kräfte, die von der Befestigung der Heizungsrohre verursacht werden, wodurch wiederum die metallische Bedampfung besser vor Schäden geschützt werden kann.

Zur Vermeidung von Fehlstellen im Bereich von aneinander anliegenden Unterbodendämmplatten kann vorgesehen werden, dass die Kunststofffolie den Dämmelementkörper an zumindest zwei, insbesondere nicht gegenüberliegenden, Seitenkanten überragt. Es kann damit die Effektivität der metallischen Bedampfung verbessert werden. Zusätzlich erlaubt diese Ausführung die Herstellung einer weitgehend wasserundurchlässigen Ebene. Beim Einsatz einer dampfdichten Metallschicht ermöglicht diese Anordnung die diffusionsdichte Ausführung des Systems.

Weiter kann vorgesehen werden, dass an der Unterseite des Dämmelementkörpers, welche der Oberseite, an der die Kunststofffolie angeordnet ist, in Richtung einer Dämmelementkörperdicke gegenüberliegt, eine Dampfsperre angeordnet ist. Durch diese Ausführungsvariante kann ebenfalls ein besserer Schutz der metallischen Bedampfung erreicht werden, indem aufsteigende Restfeuchtigkeit aus dem Rohboden, insbesondere eines Rohbetonbodens, vermieden werden kann.

Vorzugsweise weist die metallische Bedampfung eine Schichtdicke auf, die ausgewählt ist aus einem Bereich von 5 nm bis 100 nm. Bei einer Schichtdicke von weniger als 5 nm wurde eine deutliche Verringerung der Quantität der reflektierten Wärmestrahlung beobachtet. Zwar wird noch ein Teil an IR-Strahlung reflektiert, allerdings in einer Quantität, die den Einsatz des Unterbodendämmelements aus Kostengründen nicht rechtfertigt. Bei einer Schichtdicke von mehr als 200 nm wurden hingegen Haftungsprobleme der metallischen Beschichtung auf der Kunststofffolie beobachtet, woraus Probleme aufgrund der durch die Heizungsrohre verursachten Wärmedehnungen resultieren können.

Die metallische Bedampfung kann mit dem Dämmelementkörper verklebt sein, sodass wiederum ein "Puffer" zur Verfügung gestellt werden kann, falls es zu Wärmespannungen zwischen dem Dämmelementkörper und der metallischen Bedampfung kommt.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einem Fußbodenheizungssystem mit einem Unterbodendämmelement im Querschnitt;
- Fig. 2: einen Ausschnitt aus einem Heizungsrohr in Schrägansicht;
- Fig. 3: eine Draufsicht auf ein Unterbodendämmelement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

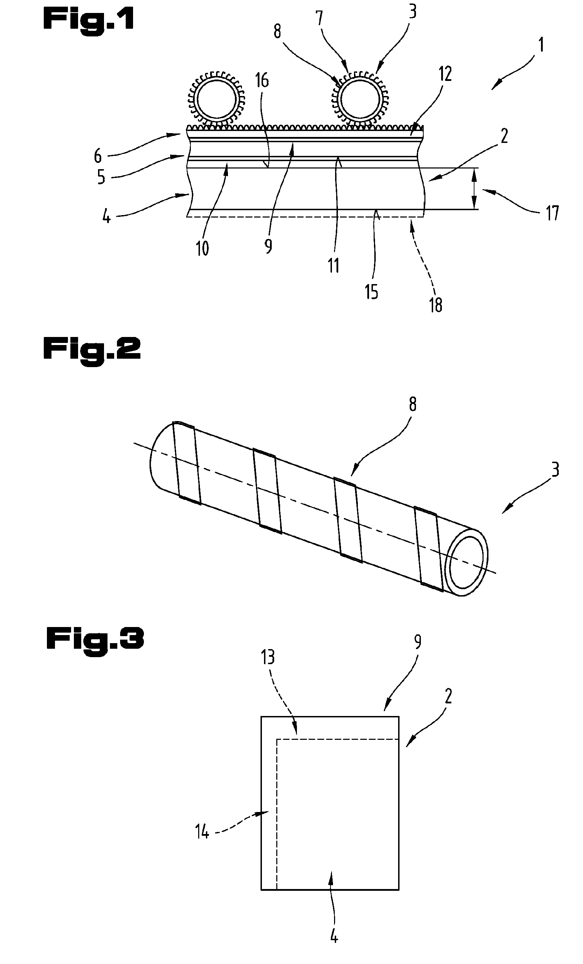

In Fig. 1 ist ein Ausschnitt aus einem Fußbodenheizungssystem 1 im Querschnitt dargestellt. Das Fußbodenheizungssystem 1 umfasst bzw. besteht aus einem oder mehreren Unterbodendämmelement(en) 2 und einem oder mehreren Heizungsrohren 3.

Da Fußbodenheizungssysteme (Flächenheizungen) prinzipiell bekannt sind, sei zu weiteren Einzelheiten dazu auf den einschlägigen Stand der Technik verwiesen. Es sei nur so viel erwähnt, dass die Heizungsrohre 3 (Heizschlangen) üblicherweise auf einer Dämmschicht befestigt und mäanderförmig verlegt werden. Die Anzahl der Heizungsrohre 3 richtet sich u.a. nach der zu beheizenden Bodenfläche.

Das Unterbodendämmelement 2 ist mehrschichtig ausgebildet. Es umfasst einen bzw. besteht aus einem Dämmelementkörper 4, zumindest eine(r) Reflexionsschicht 5 und zumindest eine(r) Befestigungsschicht 6, an der das zumindest eine Heizungsrohr 3 befestigt wird.

Der Dämmelementkörper 2 besteht aus zumindest einem (trittfesten) wärmedämmenden Werkstoff. Insbesondere ist der wärmedämmende Werkstoff ausgewählt aus einer Gruppe umfassend oder bestehend aus Polyurethanhartschaumstoff, Polystyrolschaumstoff (EPS, XPS), Polyethylenschaumstoff, Mineralwolle, z.B. Glaswolle oder Steinwolle, miteinander verbundene und gegebenenfalls gepresste Naturmaterialien, wie z.B. Kork, Holzspäne, Naturfasern, Hanffasern, miteinander verbundene und gegebenenfalls gepresste Synthesefasern, z.B. Polyestervlies, etc.

Der Dämmelementkörper 4 kann einlagig oder mehrlagig mit zumindest zwei Lagen, die insbesondere miteinander verbunden sind, ausgebildet sein. Falls der Dämmelementkörper 4 mehrlagig ausgebildet ist, können auch zumindest zwei unterschiedliche wärmedämmende Werkstoffe für die einzelnen Lagen verwendet werden.

Die Befestigungsschicht 6 zur Befestigung des zumindest einen Heizungsrohrs 3 auf dem Unterbodendämmelement 2 umfasst bzw. besteht aus einem textilen, insbesondere klettfähigen, Werkstoff. Insbesondere ist dieser Werkstoff in Form eines Velours oder eines Vlieses (Non-Woven) oder eines Gewebes, Gewirkes, Gestrickes, etc. ausgebildet. Die Befestigungsschicht 6 umfasst einen Teil eines Klettverschlusses, insbesondere den Schlaufenteil. Klettverschlüsse bestehen bekanntlich aus einem Schlaufenteil und einem Häkchenteil. Beispielsweise kann der Schlaufenteil durch ein Vlies oder ein Velours gebildet sein.

Gemäß einer bevorzugten Ausführungsvariante des Unterbodendämmelementes 2 weist das Textil ein Flächengewicht auf, das ausgewählt ist aus einem Bereich von 20 g/m² bis 200 g/m², vorzugsweise ausgewählt aus einem Bereich von 40 g/m² bis 150 g/m².

Den anderen Teil des Klettverschlusses, vorzugsweise den Häkchenteil, weist das Heizungsrohr 3 auf, wie dies aus Fig. 1 ersichtlich ist. Dazu kann das Heizungsrohr vorzugsweise mit einem Häkchen 7 aufweisenden Band 8, beispielsweise textilen Band, ausgerüstet sein, dass das Heizungsrohr 3 zumindest teilweise ummantelt. Die Ummantelung kann beispielsweise zylinderförmig sein, wobei die einzelnen Zylinder voneinander beabstandet sind. Es ist aber auch möglich, dass das Heizungsrohr 3 spiralförmig mit dem die Häkchen 7 aufweisenden Band 8 ummantelt ist, wie dies in Fig. 2 ausschnittsweise dargestellt ist. Es sei darauf hingewiesen, dass in Fig. 2 auf die Darstellung der Häkchen 7 verzichtet wurde.

Prinzipiell ist es auch möglich, dass der gesamte Rohrmantel des Heizungsrohres 3 mit dem Band 8 ummantelt ist. In diesem Fall kann anstelle eines Bandes 8 auch ein flächiges Element verwendet werden, das durch die Ummantelung zu einem Zylinder ausgebildet wird. Es ist zudem möglich, dass die Oberfläche des Heizungsrohrs 3 selbst den Häkchenteil ausbildet. Nach einer Ausführungsvariante dazu kann vorgesehen sein, dass das Band 8 oder das flächige Element mit dem Heizungsrohr 3 verbunden sein kann, beispielsweise verklebt sein kann. Das Heizungsrohr 3 an sich kann dem Stand der Technik entsprechend ausgebildet sein. Insbesondere ist es mehrschichtig ausgebildet, wie dies bekannt ist. Auch hierzu sei auf den einschlägigen Stand der Technik verwiesen.

Vorzugsweise besteht das Band 8 oder das flächige Element zumindest teilweise aus einem Polyamid, Polyester, Polyolefin oder Polyaramid.

Die Befestigungsschicht 6 bildet die äußere Schicht des Unterbodendämmelementes 2, auf die nach der Verlegung der Unterbodendämmelemente 2 und der Heizungsrohre 3 auf dem Rohfußboden der Estrich in an sich bekannter Weise nass aufgebracht wird, um die Heizungsrohre 3 einzubetten.

Der Dämmelementkörper 4 ist hingegen dem Rohfußboden am nächsten angeordnet bzw. kann auf diesem aufliegen.

Zwischen dem Dämmelementkörper 4 und der Befestigungsschicht 6 ist die Reflexionsschicht 5 angeordnet.

Die Reflexionsschicht 5 wird gemäß einer Ausführungsvariante durch eine Kunststofffolie 9 gebildet, die auf einer Seite direkt mit einem metallischen Werkstoff zur Ausbildung einer metallischen Bedampfung 10 bedampft ist.

Die Kunststofffolie 9 ist wasserdicht. Es wird darunter verstanden, dass die Kunststofffolie 9 einen Wert nach EN 343:2003 von mindestens 800 mm Wassersäule aufweist.
Weiter weist die Kunststofffolie 9 einen Sd-Wert von kleiner 1.500 m nach EN 1931 auf. Bevorzugt weist die Kunststofffolie 9 einen Sd-Wert (= wasserdampfdiffusionsäquivalente Luftschichtdicke) auf, der ausgewählt ist aus einem Bereich von 0,3 m bis 1.499 m, vorzugsweise ausgewählt aus einem Bereich von 0,5 m bis 1.499 m.

Die Kunststofffolie 9 besteht zumindest teilweise, insbesondere zu Gänze, bevorzugt aus einem Kunststoff, der ausgewählt ist aus einer Gruppe umfassend oder bestehen aus zumindest einem Polyolefin oder deren Copolymeren, wie z.B. Ethylenvinylacetate, Polyester, insbesondere PET, Polyurethane, Polyvinylchloride, thermoplastische Elastomere, beispielsweise auf Ether/Esterbasis oder Polyurethanbasis.

Es ist möglich, dass die Kunststofffolie 9 einlagig ausgebildet ist. Ebenso können aber sogenannte Verbundfolien aus mehreren bzw. zumindest zwei verschiedenen Kunststofffolien, Kunststoffgeweben oder einer Kombination dieser Materialien verwendet werden.

Die Kunststofffolie 9 weist bevorzugt eine Schichtdicke auf, die ausgewählt ist aus einem Bereich von 12 µm bis 400 µm, insbesondere ausgewählt aus einem Bereich von 12 µm bis 80 µm.

Wie aus Fig. 1 ersichtlich ist, ist die metallische Bedampfung 10 auf einer Rückseite 11 der Kunststofffolie 9 auf diese aufgebracht. Die Rückseite 10 ist dabei jener Oberfläche der Kunststofffolie 9, die dem Dämmelementkörper 4 am nächsten liegt. Somit ist die metallische Bedampfung 10 durch die Kunststofffolie 9 von der Befestigungsschicht 6 und damit dem in diese teilweise eindringenden Estrich getrennt.

Prinzipiell können für die metallische Bedampfung 10 alle geeigneten Metalle bzw. Metalllegierungen verwendet werden. Bevorzugt besteht die metallische Bedampfung 10 aber aus einem Metall, das ausgewählt ist aus einer Gruppe umfassend oder bestehend aus Aluminium, Silber, Gold, Kupfer.

Nach einer anderen Ausführungsvariante des Unterbodendämmelementes 2 kann vorgesehen sein, dass anstelle oder zusätzlich zur metallischen Bedampfung eine Metalleinlage vorgesehen ist. Die Metalleinlage erstreckt sich zumindest teilweise, insbesondere zur Gänze, über die Flächenausdehnung der Kunststofffolie 9 oder des Dämmelementkörpers 4. Ebenso wie die metallische Bedampfung ist die Metalleinlage unterhalb der Kunststofffolie 9, d.h. zwischen der Kunststofffolie 9 und dem Dämmelementkörper 4, angeordnet.

Hinsichtlich der Werkstoffe für die Metalleinlage und der Kunststofffolie 9 dieser Ausführungsvariante sei auf die voranstehenden Ausführungen zur metallischen Bedampfung und der Kunststofffolie 9 verwiesen.

Gemäß einer bevorzugten Ausführungsvariante dazu ist vorgesehen, dass die metallische Bedampfung 10 und/oder die Metalleinlage durch ein blankes Metall gebildet ist. Unter einem blanken Metall wird dabei verstanden, dass dieses keine oxidierte Oberfläche aufweist.

Nach einer weiteren Ausführungsvariante kann vorgesehen sein, dass die metallische Bedampfung 10 eine Schichtdicke aufweist, die ausgewählt ist aus einem Bereich von 5 nm bis 200 nm, insbesondere aus einem Bereich von 10 nm bis 50 nm. Neben den voranstehend genannten Vorteilen kann damit auch eine Wasserdampfdurchlässigkeit der metallischen Bedampfung 10 erreicht werden.

Wird die Reflexionsebene durch eine Metallfolie gebildet, weist diese vorzugsweise eine Schichtdicke zwischen 6 µm und 50 µm auf. Zur Herstellung einer diffusionsdichten Ebene kommt in dieser Ausführung besonders bevorzugt eine Metallfolie mit einer Schichtdicke von größer 18 µm zur Anwendung. Unter 6 µm wurde eine zu geringe Wärmeleitfähigkeit beobachtet. Der Grund für die obere Grenze von 50 µm liegt in der schlechten Weitemerarbeitbarkeit.

Die metallische Bedampfung 10 der Kunststofffolie 9 kann mit aus dem Stand der Technik bekannten Verfahren hergestellt werden.

Nach einer weiteren Ausführungsvariante des Unterbodendämmelements 2 kann vorgesehen sein, dass die Befestigungsschicht 6 für das zumindest eine Heizungsrohr 3 der Fußbodenheizung mit der Kunststofffolie 9 unter Ausbildung einer Kleberschicht 12 verklebt ist. Als Klebestoffe können dafür alle geeigneten Klebstoffe verwendet werden.

Bevorzugt wird nach eine Ausführungsvariante dazu jedoch ein Klebstoff eingesetzt, der eine Schälfestigkeit des Verbundes aus Befestigungsschicht 6, Kleberschicht 12 und Kunststofffolie 9 nach DIN 53357 von mindestens 5 N/50 mm bewirkt.

Es ist nach einer anderen Ausführungsvariante des Unterbodendämmelementes 2 auch möglich, dass die metallische Bedampfung 10 mit dem Dämmelementkörper 4 verklebt ist.

Die Kleberschicht 12 kann vollflächig, d.h. ununterbrochen über die gesamte Oberfläche der Kunststofffolie 9 bzw. des Dämmelementkörpers 4 aufgetragen sein. Es ist aber auch möglich, dass der Klebstoff nicht vollflächig, beispielsweise nur raster- oder punktförmig, auf die Oberfläche der Kunststofffolie 9 bzw. des Dämmelementkörpers 4 aufgetragen wird, beispielsweise mittels einer Rasterwalze. Es kann damit eine geringere Beeinträchtigung der IR-Durchlässigkeit erreicht werden.

Durch die Verbindung der einzelnen Schichten miteinander wird ein Unterbodendämmelement 2 zur Verfügung gestellt, das einfacher in der Handhabung für den Monteur ist.

In Fig. 3 ist eine weitere Ausführungsvariante des Unterbodendämmelementes 2 in Draufsicht gezeigt. Aus Gründen der Übersichtlichkeit wurde auf die Darstellung der Befestigungsschicht 6 verzichtet. Diese ist jedoch auch bei dieser Ausführungsvariante des Unterbodendämmelementes 2 vorhanden.

Bei dieser Ausführungsvariante weist die mit der metallischen Bedampfung 10 (Fig. 1) versehene Kunststofffolie 9 eine größere Flächenausdehnung in der Betrachtungsebene auf, als der Dämmelementkörper 4. Es ist damit möglich, dass die Kunststofffolie 9 den Dämmelementkörper 6 an zumindest zwei, insbesondere nicht gegenüberliegenden, Seitenkanten 13, 14 seitlich überragt. Bevorzugt sind dies zwei aneinander anstoßende Seitenkanten 13, 14, wie dies aus Fig. 3 ersichtlich ist. Es ist damit eine Überdeckung der mit der metallischen Bedampfung versehenen Kunststofffolie 9 im Bereich zweier aneinander anliegender Unterbodendämmelemente 2 möglich. Der überlappende Bereich der Kunststofffolie 9 eines ersten Unterbodendämmelementes 2 kann beispielsweise mit einem daran anschließenden, weiteren Unterbodendämmelement 2 verklebt werden, beispielsweise mittels eines Klebebandes. Es ist aber auch möglich, den Überlappungsbereich der Kunststofffolie 9 an der Unterseite selbstklebend auszuführen, d.h. mit einem Klebstoff zu versehen, der mittels eines abziehbaren Streifens freigelegt werden kann.

Es sei an dieser Stelle erwähnt, dass das Unterbodendämmelement 2 vorzugsweise plattenförmig mit in Draufsicht rechteckförmigem oder quadratischem Querschnitt ausgebildet ist. Beispielsweise kann es eine Größe von 1.000 mm x 1.000 mm x 15-35 mm (Plattenware) oder eine Größe von 1.000 mm x 2.000 mm x 15-35 mm (Faltplattenware) oder eine Größe von 1.000 mm x 10.000 mm x 15-35 mm (Rollware) (jeweils LxBxH) aufweisen.

Zurückkommend zur Fig. 1 sei auf eine andere Ausführungsvariante des Unterbodendämmelementes 2 hingewiesen. Bei dieser Ausführungsvariante ist an einer Unterseite 15 des Dämmelementkörpers 4, welche einer Oberseite 16, an der die Kunststofffolie 9 angeordnet ist, in Richtung einer Dämmelementkörperdicke 17 gegenüberliegt, eine Dampfsperre 18 angeordnet, wie dies in Fig. 1 strichliert angedeutet ist.

Die Dampfsperre 18 kann beispielsweise eine ein- oder mehrlagige Polyethlyen-Folie sein.

Mithilfe der Dampfsperre 18 kann besser verhindert werden, dass Wasserdampf von unten in das Unterbodendämmelement 2 eindringt.

Es ist auch bei dieser Ausführungsvariante möglich, dass die Dampfsperre 18 eine größere Flächenausdehnung in der Betrachtungsebene aufweist, als der Dämmelementkörper 4, und damit den Dämmelementkörper 6 an zumindest zwei, insbesondere nicht gegenüberliegende, Seitenkanten 13, 14 seitlich überragt. Bevorzugt sind dies zwei aneinander anstoßende Seitenkanten, wobei noch bevorzugter ist, dass dies die beiden verbleibenden Seitenkanten sind, wenn die mit der metallischen Bedampfung 10 ebenfalls den Dämmelementkörper 6 an zumindest zwei Seitenkanten 13, 14 seitlich überragt, wie dies voranstehend ausgeführt wurde. Es ist dabei auch möglich, dass der überstehende Teil der Dampfsperre 18 an der Oberseite selbstklebend ausgeführt ist, wie dies voranstehend zur Kunststofffolie 9 ausgeführt wurde, um damit die Dichtheit zwischen zwei aneinander anliegenden Unterbodendämmelementen 2 im überlappenden Bereich der Dampfsperre 18 herstellen zu können.

Es kann weiter vorgesehen sein, dass die Kunststofffolie an der mit der metallischen Bedampfung 10 versehenen Oberfläche aufgeraut ist. Die metallische Bedampfung 10 formt in der Folge diese Oberflächenrauhigkeit nach, wodurch eine breiter gestreute Reflektion der Wärmestrahlung und damit eine gleichmäßigere Erwärmung des Estrichs bzw. des fertigen Fußbodens erreicht werden kann.

Im Rahmen der Evaluierung der Eigenschaften des Unterbodendämmelementes 2 wurden an diesem die hemisphärischen IR-Reflexionsgrade bei verschiedenen Temperaturen gemessen. Die Messungen wurden mit einem FT-IR-Spektrophotometer PE S100 mit 10 cm goldbeschichteter Ulbrichkugel durchgeführt. Als Reflexionsstandard wurde diffus gold herangezogen, das einen Wert von 97 % aufweist. Es wurden jeweils drei Messungen (128 scans) durchgeführt. Die Auswertung erfolgte mittels Plank'scher Strahlungsverteilung bei 20 °C, 100 °C und 150 °C. Die Unterbodendämmelemente 2 wiesen jeweils eine mit Aluminium bedampfte Kunststofffolie 9 aus PET auf. Die Befestigungsschicht 6 bestand aus einem Velours.

Die infraroten Reflexionsgrade betrugen zwischen 21 % und 30 % bei 20 °C, zwischen 24 % und 32 % bei 100 °C und zwischen 26 % und 33 % bei 150 °C.

Sämtliche in dieser Beschreibung genannten Normen beziehen sich auf die am Anmeldetag letztgültigen Fassung der jeweiligen Norm, sofern nicht ausdrücklich etwas anderes angegeben ist.

Die Ausführungsbeispiele zeigen mögliche Ausführungsvarianten des Unterbodendämmelementes 2 bzw. des Fußbodenheizungssystems 1, wobei an dieser Stelle bemerkt sei, dass auch diverse Kombinationen der einzelnen Ausführungsvarianten untereinander möglich sind.

Neben dem Unterbodendämmelement 2 bzw. des Fußbodenheizungssystesm 1 kann auch eine Verbundfolie aus der metallbedampften Kunststofffolie 9 mit der auf dieser angeordneten Befestigungsschicht 6 oder eine Verbundfolie aus der Metalleinlage, der darüber angeordneten Kunststofffolie 9 und der auf letztere angeordneten Befestigungsschicht 6, wobei die Metallbedampfung oder die Metalleinlage jeweils auf der Rückseite der Kunststofffolie 9 angeordnet sind (im Sinne der voranstehenden Ausführungen), eine eigenständige Erfindung darstellen.

Der Ordnung halber sei abschließend darauf hingewiesen, dass zum besseren Verständnis des Aufbaus des Unterbodendämmelementes 2 bzw. des Fußbodenheizungssystems 1 diese bzw. deren Bestandteile teilweise unmaßstäblich und/oder vergrößert und/oder verkleinert dargestellt wurden.

### Bezugszeichenaufstellung

- 1: Fußbodenheizungssystem
- 2: Unterbodendämmelement
- 3: Heizungsrohr
- 4: Dämmelementkörper
- 5: Reflexionsschicht

- 6: Befestigungsschicht
- 7: Häkchen
- 8: Band
- 9: Kunststofffolie
- 10: Bedampfung

- 11: Rückseite
- 12: Kleberschicht
- 13: Seitenkante
- 14: Seitenkante
- 15: Unterseite

- 16: Oberseite
- 17: Dämmelementkörperdicke
- 18: Dampfsperre

## Patentansprüche

1. Unterbodendämmelement (2) umfassend einen Dämmelementkörper (4) aus einem wärmedämmenden Werkstoff, eine Reflexionsschicht (5) und eine Befestigungsschicht (6) für zumindest ein Heizungsrohr (3) einer Fußbodenheizung, wobei die Reflexionsschicht (5) zwischen dem Dämmelementkörper (4) und der Befestigungsschicht (6) für das zumindest eine Heizungsrohr (3) angeordnet ist, **dadurch gekennzeichnet, dass** die Reflexionsschicht (5) eine metallisch bedampfte, wasserdichte Kunststofffolie (9) mit einem Sd-Wert von kleiner 1500 m nach EN 1931 ist, wobei die metallische Bedampfung (10) an einer, auf den Dämmelementkörper (4) weisenden Rückseite (11) der Kunststofffolie (9) aufgebracht ist oder dass die Reflexionsschicht (5) eine Metalleinlage ist, die an einer, auf den Dämmelementkörper (4) weisenden Rückseite (11) einer Kunststofffolie (9) mit einem Sd-Wert von kleiner 1500 m nach EN 1931 angeordnet ist.

2. Unterbodendämmelement (2) nach Anspruch 1, **dadurch gekennzeichnet, dass** die metallische Bedampfung (10) oder die Metalleinlage durch ein blankes Metall gebildet ist.

3. Unterbodendämmelement (2) nach Anspruch 1 oder 2, **dadurch gekennzeichnet, dass** die Befestigungsschicht (6) für das zumindest eine Heizungsrohre (3) einer Fußbodenheizung mit der Kunststofffolie (9) verklebt ist.

4. Unterbodendämmelement (2) nach einem der Ansprüche 1 bis 3, **dadurch gekennzeichnet, dass** der Verbund der Befestigungsschicht (6) mit der Kunststofffolie (9) über den Klebstoff eine Schälfestigkeit nach DIN 53357 von mindestens 5 N/50 mm aufweist.

5. Unterbodendämmelement (2) nach einem der Ansprüche 1 bis 4, **dadurch gekennzeichnet, dass** die Befestigungsschicht (6) ein Textil ist, das ein Flächengewicht aufweist, das ausgewählt ist aus einem Bereich mit einer unteren Grenze von 20 g/m² und einer oberen Grenze von 200 g/m².

6. Unterbodendämmelement (2) nach einem der Ansprüche 1 bis 5, **dadurch gekennzeichnet, dass** die Kunststofffolie (9) den Dämmelementkörper (4) an zumindest zwei Seitenkanten (13, 14) überragt.

7. Unterbodendämmelement (2) nach einem der Ansprüche 1 bis 6, **dadurch gekennzeichnet, dass** an der Unterseite (15) des Dämmelementkörpers (4), welche einer Oberseite (16), an der die Kunststofffolie (9) angeordnet ist, in Richtung einer Dämmelementkörperdicke (17) gegenüberliegt, eine Dampfsperre (18) angeordnet ist.

8. Unterbodendämmelement (2) nach einem der Ansprüche 1 bis 7, **dadurch gekennzeichnet, dass** die metallische Bedampfung (10) eine Schichtdicke aufweist, die ausgewählt ist aus einem Bereich von 5 nm bis 200 nm.

9. Unterbodendämmelement (2) nach einem der Ansprüche 1 bis 8, **dadurch gekennzeichnet, dass** die metallische Bedampfung (10) mit dem Dämmelementkörper (4) verklebt ist.

10. Fußbodenheizungssystem (1) umfassend zumindest ein Unterbodendämmelement (2) und zumindest ein Heizungsrohr (3), **dadurch gekennzeichnet, dass** das Heizungsrohr (3) mit einem Teil eines Klettverschlusses zumindest teilweise ummantelt ist und dass das Unterbodendämmelement (2) nach einem der vorhergehenden Ansprüche ausgebildet ist.
